# EUROPÄISCHE PATENTSCHRIFT

(11) **EP 1 508 552 B1**
(45) Veröffentlichungstag und Bekanntmachung des Hinweises auf die Patenterteilung: **16.05.2007**
(21) Anmeldenummer: 04013789.5
(22) Anmeldetag: 11.06.2004
(51) Int. Cl.: C04B 28/30, C04B 18/26, C04B 24/36

(54) **Holzwollespäne-Bauprodukt**
Woodwool chips based construction product
Produit de construction à base de copeaux de laine de bois

(30) Priorität: 21.08.2003 DE 10338327
(43) Veröffentlichungstag der Anmeldung: 23.02.2005
(73) Patentinhaber: HERAKLITH AG, 9702 Ferndorf (AT)
(72) Erfinder: Eusch, Ingram, 9500 Villach (AT); Mente, Markus, 9587 Riegersdorf (AT)
(74) Vertreter: Becker, Thomas

(56) Entgegenhaltungen:
- US-A- 3 963 849
- US-A- 4 504 402
- PATENT ABSTRACTS OF JAPAN Bd. 2002, Nr. 08, 5. August 2002 (2002-08-05) -& JP 2002 114553 A (ASAHI KASEI CORP; MITSUBISHI PAPER MILLS LTD), 16. April 2002 (2002-04-16)

## Beschreibung

Die Erfindung betrifft ein Bauprodukt beziehungsweise einen substantiellen Bestandteil eines Bauproduktes, jeweils ausgenommen Bodenbeläge, die nach prEN 13501-1 (Europäischer Normenentwurf) klassifiziert werden können.

Dabei steht im Vordergrund ein Bauprodukt oder ein substantieller Bestandteil eines Bauproduktes, bei denen Holzwollespäne unter Ausbildung eines offenporigen Strukturkörpers untereinander mit einem Bindemittel verbunden sind (sogenannte HWL-Produkte).

Gemäß der europäischen Norm EN 13168 (Mai 2001) werden lange Hobelspäne aus Holz auch als Holzwolle bezeichnet. Wegen der weiteren Begriffe und Symbole wird auf die EN 13168 Bezug genommen.

HWL-Bauprodukte sind unter der Marke "HERAKLITH" bekannt und können als Platten konfektioniert sein. Die genannten HERAKLITH^{®}-Platten sind mit einem anorganischen Bindemittel, beispielsweise Zement, insbeson-dere einem magnesitischen Zement, gebunden. Sie besitzen eine Rohdichte zwischen 250 und 700 kg/m³ und finden vielfältig im Bauwesen Anwendung.

In der FR 1 417 698 wird eine solche Platte aus Holzwolle und einem anorganischen Bindemittel beschrieben, bei der die Hohlräume der Platte mit einem synthetischen Schaummaterial verfüllt sind. Auf diese Weise soll eine extrem poröse Matrix ausgebildet und gleichzeitig die mechanische Stabilität der Platte erhöht werden.

Die WO 94/04473 beschreibt eine Holzwolle-Leichtbauplatte mit einem offenporigen Gerüst aus verdichteter Holzwolle, wobei die Holzwolle-Teilchen oberflächlich mit einem Bindemitel inkrustiert sind, welches eine Schaumstruktur aufweist. Auf diese Weise soll ein größeres Porenvolumen in der Platte ausgebildet werden.

Holzwolle-Bauprodukte der vorgenannten Art haben sich grundsätzlich bewährt. Die Leichtbau-Konstruktion hat jedoch den Nachteil einer nur beschränkten Wärmespeicherkapazität. Insoweit kommt es zu relativ starken Temperaturschwankungen in Gebäuden, die mit diesen Produkten ausgerüstet sind.

Aufgabe der Erfindung ist es, ein solches Bauprodukt (oder einen substantiellen Bestandteil eines solchen Bauproduktes) auf Basis von Holzwollespänen, die untereinander mit einem Bindemittel verbunden sind, hinsichtlich seiner Wärmespeicherfähigkeit zu verbessern.

Der Erfindung liegt folgende Überlegung zugrunde: Es sind sogenannte Latentwärmespeicher bekannt, bei denen Wärme oder Kälte in einer Phasenumwandlung gespeichert wird. Wird ein solches Material aufgeschmolzen, wird Wärme verbraucht, ohne dass sich die Temperatur erhöht. Erst wenn das gesamte Material des Latentwärmespeichers geschmolzen ist, steigt die Temperatur weiter an. Mit anderen Worten: die Verwendung eines solchen Latentwärmespeichers kann einen Temperaturanstieg innerhalb eines bestimmten, meist engen Temperaturbereiches, für eine gewisse Zeit aufhalten. Latentwärmespeicher sind als solche bekannt, aber für andere Anwendungen [Patent Abstracts of Japan Bd. 2002, Nr. 08, 5. August 2002 & JP 2002 114553 A].

Wenn man einen solchen Latentwärmespeicher in ein Bauprodukt der genannten Art integriert, dessen Schmelztemperatur auf den jeweiligen Anwendungsbereich angepasst ist, kann ein solches Bauprodukt der Umgebungsatmosphäre Wärme entziehen, ohne selbst wärmer zu werden. Damit erweist sich ein solches Bauprodukt innerhalb gewisser Grenzen als Alternative zu einer Klimaanlage, die damit überflüssig wird. Gleichzeitig wird Energie (für die Klimaanlage) gespart und die Umwelt entlastet.

Die vorstehenden Ausführungen gelten analog für einen substantiellen Bestandteil eines Bauproduktes. Nachstehend umfasst der Begriff "Bauprodukt" entsprechend stets auch einen substantiellen Bestandteil eines Bauproduktes.

In ihrer allgemeinsten Ausführungsform betrifft die Erfindung ein Bauprodukt oder einen substantiellen Bestandteil eines Bauproduktes, die jeweils folgende Merkmale aufweisen:
- Holzwollespäne, die untereinander mit einem Bindemittel unter Ausbildung eines offenporigen Strukturkörpers verbunden sind,
- mindestens einen, im Strukturkörper verteilten, gekapselten Latentwärmespeicher.

Die Kapselung (Umhüllung) des Latentwärmespeichers ist wichtig, um den Zusatzstoff stets in gleichbleibender Konfektionierung im Strukturkörper zu halten. Die Umhüllung (Kapsel) sorgt dafür, dass das Speichermaterial nicht "ausfließt", wenn seine Schmelztemperatur erreicht oder überschritten wird.

Um eine möglichst gute Verteilung des Latentwärmespeichers im Bauprodukt zu erhalten, sollen die Kapseln, beispielsweise Kunststoffkapseln, möglichst klein sein. Sie können einen Durchmesser deutlich kleiner 1 mm, beispielsweise im Bereich 0,005 bis 0,2 mm aufweisen. Durch die geringe Größe der Kapseln ist die Gesamtoberfläche sehr groß und der Wärmeaustausch optimiert.

Der Latentwärmespeicher kann beispielsweise aus einem oder mehreren der folgenden Materialien bestehen: Wachs, Paraffin, Fett-alkohol, Fettsäure, Salzhydrat.

Diese Stoffe, beispielsweise Paraffinkohlenwasserstoffe oder Salzhydrate wie Hydrate von Natriumcarbonat, Natriumacetat, Calciumchlorid beziehungsweise Lithium-Magnesiumnitrat weisen eine hohe Schmelzwärme (Umwandlungswärme) auf, das ist die Wärmemenge, die am jeweiligen Schmelzpunkt zum Übergang vom festen in den flüssigen Zustand benötigt wird.

Ausgehend von der Verwendung eines erfindungsgemäßen Bauproduktes als tragender oder nicht tragender Konstruktionskörper im Hochbau und ausgehend von der Prämisse, dass Wohn- und Arbeitsräume bevorzugt eine mehr oder weniger konstante Temperatur zwischen 18 und 24° C aufweisen sollten, sieht eine Ausführungsform der Erfindung vor, Latentwärmespeicher mit einem Schmelzpunkt zwischen 18 und 30° C, nach Ausführungsformen zwischen 18 und 24 oder 20 und 25° C zu verwenden.

Die konkrete Auswahl des Latentwärmespeichers hängt vom jeweiligen Anwendungsbereich ab. Dies gilt auch hinsichtlich der jeweiligen Schmelzwärme, die beispielsweise im Bereich 100 bis 300 J/gK liegt.

Die genannten Mikrokapseln lassen sich problemlos während eines an sich bekannten Herstellungsprozesses für das Bauprodukt integrieren.

Eine Möglichkeit besteht darin, die Mikrokapseln in das flüssig bis viskos aufbereiteten Bindemittel einzumischen, welches anschließend mit der Holzwolle vermischt wird. Ebenso können die gekapselten Latentwärmespeicher auch in den eingangs erwähnten Bindemittelschaum eingebracht und mit diesem weiter verarbeitet werden. Dabei ist keine Änderung des Herstellungsprozesses gegenüber konventionellen Holzwolle-Bauprodukten notwendig.

Eine weitere Alternative besteht darin, nach der Herstellung eines konventionellen Holzwolle-Bauproduktes, aber zu einem Zeitpunkt, zu dem das Bindemittel noch "klebrig" ist, die erwähnten Mikrokapseln auf die Oberfläche des Bauproduktes aufzustreuen oder aufzusprühen und gegebenenfalls durch einen Druckkörper, wie eine Walze, bei Bedarf zusätzlich im Oberflächenbereich des Bauproduktes zu fixieren. Ebenso kann das Bauprodukt in einem Bad aus oder mit Mikrokaspeln geflutet oder getaucht werden.

In allen Fällen dient das Bindemittel also dazu, Mikrokapseln nach Aushärtung des Bindemittels festzuhalten.

Ebenso ist es möglich, die Holzwollespäne vor der Verarbeitung leicht zu befeuchten oder zu imprägnieren, beispielsweise mit einem Brandschutzmittel, wobei die entsprechende Flüssigkeit eine gewisse Klebewirkung zeigt, die ausreicht, die mikronisierten Kapseln an der Oberfläche der Holzwolle-Späne festzuhalten.

Die Kapseln können über das gesamte Volumen des Bauproduktes verteilt werden. Die Verteilung kann aber auch auf bestimmte Zonen, insbesondere Oberflächenzonen des Bauproduktes, beschränkt sein. Ihre Menge richtet sich nach der jeweils gewünschten Wärmespeicherkapazität. Sie beträgt beispielsweise 5 bis 50 Gew.-%, bezogen auf die Gesamtmasse an Holzwollespäne und Bindemittel. Üblicherweise wird ein Anteil unter 30 Gew.-%, beispielsweise zwischen 10 und 20 Gew.-% oder 15 bis 25 Gew.-% ausreichend sein. Die genannten Unter- und Obergrenzen sind Beispiele und dem jeweiligen Anwendungsfall anzupassen.

Ein erfindungsgemäß ausgebildetes Bauprodukt kann, je nach Art und Menge der verwendeten Latentwärmespeicher (auch Phase Change Material genannt), eine Wärmespeicherkapazität aufweisen, die der einer Beton- oder Ziegelwand entspricht, trotz seiner offenporigen Struktur (und entsprechend geringer Rohdichte) sowie deutlich geringeren Dicke.

Beispielsweise entspricht die Wärmekapazität einer Holzwolle-Leichtbauplatte der genannten Art, die 25 Gew.-% eines oder mehrerer der genannten gekapselten Latentwärmespeicher umfasst, bei einer Materialstärke von 2 cm einer etwa 20 cm dicken Ziegel- oder Betonwand (-decke) im relevanten Temperaturbereich zwischen 18 und 30 beziehungsweise 20 und 25° C. Dabei kann der Latentwärmespeicher beispielsweise ein Alkan sein, welches zwischen 20 und 25° C schmilzt und dessen Schmelzwärme ca. 200 J/gK beträgt.

Hinsichtlich der Auswahl der Holzwollespäne und des Bindemittels kann auf den Stand der Technik zurückgegriffen werden. Holzwollespäne (auch Holzwollefasern genannt) weisen üblicherweise eine Länge von mehr als 8 cm, eine Breite von 1 bis 5 mm und eine Dicke von 0,2 bis 0,5 mm auf. Neben dem Gesamtanteil an offener Porosität innerhalb des Bauproduktes weist auch der einzelne Holzspan eine erhebliche offene (Mikro)Porosität (sogenannte Zellen) auf. Der Gesamtanteil an offener Porosität innerhalb des Bauproduktes kann beispielsweise zwischen 50 und 80 Vol.-% betragen.

Als Bindemittel wird insbesondere ein anorganisches Bindemittel eingesetzt, beispielsweise ein Bindemittel auf Basis MgO (MgO-Kauster). Ebenso kann das Bindemittel aber auch ein organisches Bindemittel sein, beispielsweise ein Acryl-Monomer, eine Lösung oder Dispersion eines Polyacrylats, eine Stärke oder dergleichen.

Das Bauprodukt lässt sich durch Zusatzstoffe ergänzen, beispielsweise Brandschutzmittel. Auch insoweit kann auf den Stand der Technik zurückgegriffen werden.

Weitere Merkmale der Erfindung ergeben sich aus den Merkmalen der Patentansprüche.

## Patentansprüche

1. Bauprodukt oder substantieller Bestandteil eines Bauproduktes, jeweils umfassend:
a) Holzwollespäne, die untereinander mit einem Bindemittel unter Ausbildung eines offenporigen Strukturkörpers verbunden sind,
b) mindestens einen, im Strukturkörper verteilten, gekapselten Latentwärmespeicher.

2. Bauprodukt nach Anspruch 1, dessen Latentwärmespeicher ein Wachs ist.

3. Bauprodukt nach Anspruch 1, dessen Latentwärmespeicher ein Paraffin ist.

4. Bauprodukt nach Anspruch 1, dessen Latentwärmespeicher ein Fettalkohol ist.

5. Bauprodukt nach Anspruch 1, dessen Latentwärmespeicher eine Fettsäure ist.

6. Bauprodukt nach Anspruch 1, dessen Latentwärmespeicher ein Salzhydrat ist.

7. Bauprodukt nach Anspruch 1, bei dem der oder die Latentwärmespeicher in Mikrokapseln mit einem Durchmesser < 1 mm konfektioniert sind.

8. Bauprodukt nach Anspruch 7, bei dem die Mikrokapseln einen Durchmesser zwischen 0,005 und 0,2 mm aufweisen.

9. Bauprodukt nach Anspruch 1, bei dem der Latentwärmespeicher eine Schmelztemperatur zwischen 18 und 30° C aufweist.

10. Bauprodukt nach Anspruch 1, bei dem der Latentwärmespeicher eine Schmelztemperatur zwischen 20 und 25° C aufweist.

11. Bauprodukt nach Anspruch 1, bei dem der Latentwärmespeicher eine Schmelzwärme zwischen 100 und 300 J/gK aufweist.

12. Bauprodukt nach Anspruch 1, bei dem der Latentwärmespeicher in einer Kunststoffhülle gekapselt ist.

13. Bauprodukt nach Anspruch 1, bei dem der Latentwärmespeicher durch das Bindemittel im Strukturkörper fixiert ist.

14. Bauprodukt nach Anspruch 1, bei dem das Bindemittel ein anorganisches Bindemittel ist.

15. Bauprodukt nach Anspruch 1, bei dem das Bindemittel ein magnesitisches Bindemittel ist.

16. Bauprodukt nach Anspruch 1, bei dem der Latentwärmespeicher gleichmäßig über das Volumen des Strukturkörpers verteilt ist.

17. Bauprodukt nach Anspruch 1, bei dem der Latentwärmespeicher zumindest überwiegend im Bereich mindestens einer Oberfläche des Strukturkörpers verteilt ist.

## Claims

1. Construction product or substantial part of a construction product, each comprising:
a) wood-wool chips, linked by a binder while forming a structural body of open porosity,
b) at least one latent heat accumulator, encapsulated and distributed within the structural body.

2. Construction product according to claim 1, which latent heat accumulator is a wax.

3. Construction product according to claim 1, which latent heat accumulator is a paraffin.

4. Construction product according to claim 1, which latent heat accumulator is a fatty alcohol.

5. Construction product according to claim 1, which latent heat accumulator is a fatty acid.

6. Construction product according to claim 1, which latent heat accumulator is a salt hydrate.

7. Construction product according to claim 1, which latent heat accumulator is prepared as micro capsules with a diameter of < 1 mm.

8. Construction product according to claim 7, the micro capsules of which have a diameter between 0,005 and 0,2 mm.

9. Construction product according to claim 1, the latent accumulator of which has a melting temperature between 18 and 30° C.

10. Construction product according to claim 1, the latent accumulator of which has a melting temperature between 20 and 25° C.

11. Construction product according to claim 1, the latent heat accumulator of which prepares a melting heat between 100 and 300 J/gk.

12. Construction product according to claim 1, the latent heat accumulator of which is encapsulated in a plastic sheet.

13. Construction product according to claim 1, the latent heat accumulator of which is fixed within the structural body by the binder.

14. Construction product according to claim 1, the binder of which is an inorganic binder.

15. Construction product according to claim 1, the binder of which is a magnesitic binder.

16. Construction product according to claim 1, the latent heat accumulator of which is regularly distributed within the volume of the structural body.

17. Construction product according to claim 1, the latent heat accumulator of which is predominantly distributed along at least one surface of the structural body.

## Revendications

1. Produit de construction ou partie substantielle d'un produit de construction, comportant respectivement:
a) des copeaux de laine de bois, qui sont reliés entre eux par un liant de manière à former un corps structurel à pores ouverts,
b) au moins un accumulateur de chaleur latente encapsulé et réparti dans le corps structurel.

2. Produit de construction selon la revendication 1, dont l'accumulateur de chaleur latente est une cire.

3. Produit de construction selon la revendication 1, dont l'accumulateur de chaleur latente est une paraffine.

4. Produit de construction selon la revendication 1, dont l'accumulateur de chaleur latente est un alcool gras.

5. Produit de construction selon la revendication 1, dont l'accumulateur de chaleur latente est un acide gras.

6. Produit de construction selon la revendication 1, dont l'accumulateur de chaleur latente est un hydrate de sel.

7. Produit de construction selon la revendication 1, dans lequel le ou les accumulateurs de chaleur latente sont confectionnés dans des microcapsules avec un diamètre inférieur à 1 mm.

8. Produit de construction selon la revendication 7, dans lequel les microcapsules ont un diamètre entre 0,005 et 0,2 mm.

9. Produit de construction selon la revendication 1, dans lequel l'accumulateur de chaleur latente présente une température de fusion entre 18 et 30°C.

10. Produit de construction selon la revendication 1, dans lequel l'accumulateur de chaleur latente présente une température de fusion entre 20 et 25°C.

11. Produit de construction selon la revendication 1, dans lequel l'accumulateur de chaleur latente présente une chaleur de fusion entre 100 et 300 J/gK.

12. Produit de construction selon la revendication 1, dans lequel l'accumulateur de chaleur latente est encapsulé dans une enveloppe plastique.

13. Produit de construction selon la revendication 1, dans lequel l'accumulateur de chaleur latente est fixé par le liant dans le corps structurel.

14. Produit de construction selon la revendication 1, dans lequel le liant est un liant anorganique.

15. Produit de construction selon la revendication 1, dans lequel le liant est un liant magnésitique.

16. Produit de construction selon la revendication 1, dans lequel l'accumulateur de chaleur latente est réparti uniformément dans le volume du corps structurel.

17. Produit de construction selon la revendication 1, dans lequel l'accumulateur de chaleur latente est réparti au moins principalement dans la zone d'au moins une des surfaces du corps structurel.
